# EUROPEAN PATENT SPECIFICATION

(11) **EP 2 631 322 B1**
(45) Date of publication and mention of the grant of the patent: **09.11.2016**
(21) Application number: 11834129.6
(22) Date of filing: 05.09.2011
(51) Int. Cl.: C23C 4/06, B23K 9/00, B23K 9/028, B23K 9/23, B23K 35/30, C22C 19/05, F22B 37/04

(54) **ALLOY-COATED BOILER COMPONENT**
LEGIERUNGSBESCHICHTETE KESSELKOMPONENTE
ÉLÉMENT DE CHAUDIÈRE REVÊTU D'ALLIAGE

(30) Priority: 22.10.2010 JP 2010237017
(43) Date of publication of application: 28.08.2013
(73) Proprietor: Dai-Ichi High Frequency Co., Ltd., Chuo-ku Tokyo 103-0002 (JP)
(72) Inventor: MATSUBARA, Yoichi, Kawasaki-shi Kanagawa 210-0866 (JP); SOCHI,Yoshinobu, Kawasaki-shi Kanagawa 210-0866 (JP); TAKEYA, Akihiro, Kawasaki-shi Kanagawa 210-0866 (JP)
(74) Representative: Grünecker Patent- und Rechtsanwälte PartG mbB
(86) International application number: PCT/JP2011/070111
(87) International publication number: WO 2012/053287

(56) References cited:
- EP-A1- 0 824 986
- EP-A1- 2 080 951
- JP-A- 8 067 937
- JP-A- 10 170 194
- JP-A- H10 170 194
- JP-A- 2004 176 158
- JP-A- 2005 274 022
- US-A1- 2005 166 987
- US-A1- 2008 318 078

## Description

### Technical Field

The present invention relates to a boiler component (hereinafter, referred to as "boiler tube") such as a tube component constituting a heat transfer tube in various types of boilers, or a plate material-tube material composite panel (hereinafter, referred to as "boiler furnace panel") constituting a furnace housing with a cooling-water passage, and more specifically to a boiler component with alloy coatings for improving durability and suitable for the welding.

### Background Art

Firstly, taking an example of a boiler tube, in the past days when the operation temperature of the boiler was lower than that in these days, and the erosion and corrosion environments inside the furnace were not so severe, the steel tube for boiler (low alloy steel tube) was commonly used as it was, taking into consideration of high temperature usability concerning mechanical characteristics. Further, although stainless tubes and further titanium tubes were also used for the application requiring corrosion resistance, they were not commonly used because of their high costs.

In recent years, boilers recovering and utilizing refuse incineration heat have increased, whereby, particularly, a problem of erosion (wear) is caused by combustion ash dust, and in order to solve this problem, boilers with a specification applying a thermal spray coating with alloy superior in erosion resistance are starting to be commonly used.
However, the above described alloy coating is a coating (unmelted coating) which is left as thermal-sprayed by, for example, HVOF (High Velocity Oxygen Fuel) or plasma thermal spraying apparatus and a self-fluxing alloy coating having fusing treatment applied after being thermal sprayed is rarely used.

The reason why the application of the melted coating with the self-fluxing alloy (self-fluxing alloy coating having fusing treatment applied after being thermal sprayed) to the boiler tube is uncommon is that an extraordinary difficult work is required because thermal shock cracking easily occurs on the melted coating under rapid local temperature rise at the time of the welding operation when the boiler tube is welded for use, whereby, the whole tubes have to be preheated at high temperature and then high temperature tubes have to be joined by welding.
However, as for the boilers in recent years, the problems concerning not only erosion but also corrosion are becoming important together with the demand for high-temperature burning for efficiency in power generation by refuse incineration, thus melted coating application to the boiler is increasingly desired.

As one example thereof, in the patent document 1, a constitution applying a melted coating with a self-fluxing alloy to a boiler tube is disclosed. It adopts the constitution in which a portion of about 50 mm at an end of the boiler tube is not thermally sprayed, and this portion is used as a margin for joining (the patent document 1, page 3, column 4, lines 15 to 16). On this portion which is not thermally sprayed, process for fitting a protector member is performed instead of coating after welding (the same document, column 4, lines 24 to 26). Since above process requires a special order of the protector member (for example, made of alumina) having high erosion resistance, or a fitting operation inside a narrow boiler, it results in higher cost in materials and working and also requires front loaded procurement of materials.

Next, in case of the boiler furnace panel, since it has a composite constitution in which tube materials and plate materials are arranged alternately as described above and it has a large dimension (for example, 0.5 m by 6 m), it is further difficult to use a practical auxiliary member corresponding to the above protector, and further, there is a problem of complicated shape distortion associated with fusing treatment after thermal spraying (see, for example, the patent document 2 and the patent document 3).

As an alloy-coated boiler component (a boiler tube and a boiler furnace panel) in which the melted coating with the alloy material superior in erosion resistance and corrosion resistance is applied to the whole area of the metallic base material to be protected and thermal shock cracking does not occur on the melted coating even if the local temperature rises rapidly at the time of the welding operation, the present applicant proposes an alloy-coated boiler component in which a coating with a Ni-Cr alloy material in which the contents of B (boron) and Si (silicon) which are melting point lowering elements are low (the proportion of B is not more than 0.1 mass % and the proportion of Si is not more than 0.5 mass %) is applied to an end region (a rapidly-rising temperature region where thermal shock cracking is likely to occur at the time of the welding operation) including an end to be welded, and a coating with a Ni-Cr alloy material including 1 to 5 mass % of B and Si respectively is applied to a region other than the end region (a remaining region other than the rapidly-rising temperature region) (see the patent document 4).

Since the alloy-coated boiler component described in the patent document 4 has the coating with the Ni-Cr alloy material on the whole area of the metallic base material to be protected, it has good durability and corrosion resistance.
Further, the coating applied to the end region (the rapidly-rising temperature region where thermal shock cracking is likely to occur at the time of the welding operation) has improved thermal shock resistance because the contents of B and Si are low. Accordingly, thermal shock cracking does not occur on the coating even if the local temperature rises rapidly at the time of the welding operation (superior in thermal shock resistance).
Further, since the coating with the Ni-Cr alloy material comprising less contents of B and Si applied to the end region is low in hardness (to inhibit high hardness precipitate from being produced by the reaction by B or Si with Cr), it has resistance characteristics (resistance to shock) not only to thermal shock but also to mechanical shock.

### Citation List

### Patent Literature

Patent Document 1: JP-A No. 10-170194
Patent Document 2: JP-A No. 2001-4101
Patent Document 3: JP-A No. 2000-329304
Patent Document 4: JP-B No. 4411114

### Summary of Invention

### Technical Problem

In the alloy-coated boiler component described in the above patent document 4. since the alloy material for obtaining the melted coating applied to the end region (the rapidly-rising temperature region) comprises less contents of B and Si which are melting point lowering elements (the content of B is not more than 0.1 mass % and the content of Si is not more than 0.5 mass %), its melting point is over 1500°C, which is far higher compared to the melting point of the alloy material (the contents of B and Si are 1 to 5 mass % respectively) for obtaining melted coating applied to the region other than the end region.

Accordingly, in the end region (the rapidly-rising temperature region), it is not possible to adopt a way for forming the coating (thermal spraying-fusing treatment) performed in the region other than the end region, and the coating in the end region should be performed by weld surfacing.

As described above, it is extremely disadvantageous in manufacturing efficiency to use different ways for forming the coatings in the end region and in the region other than the end region.

Further, since in case of performing weld surfacing, the temperature in the metallic base material rises up to about 1500°C, there is a fear that distortion (welding distortion) might occur in the metallic base material.

Accordingly, it is desired to develop an alloy-coated boiler component in which the coatings in all regions including the end region can be formed by thermal spraying-fusing treatment and further it is good in thermal shock resistance and resistance to shock in the coating formed on the end region.

The present invention has been made based on the above-mentioned circumstances. An object of the present invention is to provide an alloy-coated boiler component in which the whole area (the end region and the non-end region) of the metallic base material to be protected has melted coatings which are formed by thermal spraying-fusing treatment and the melted coating formed on the end region is superior in thermal shock resistance and resistance to shock.

### Solution to Problem

(1) An alloy-coated boiler component of the present invention is characterized in that a coating with an alloy material is applied to a metallic base material and its end is to be welded.
   wherein a melted coating with a first alloy material comprising:
   not less than 1.5 mass % and not more than 2.5 mass % of B,
   not less than 3.5 mass % and not more than 4.0 mass % of Si,
   not more than 0.4 mass % of C, and
   not less than 12.0 mass % and not more than 17.0 mass % of Cr, and
   the balance being Ni and incidental impurities,
   is applied to the metallic base material on an end region including the end and its proximity and,
   a melted coating of a second alloy material comprising:
   more than 2.5 mass % and not more than 4.0 mass % of B,
   more than 4.0 mass % and not more than 5.0 mass % of Si,
   not less than 0.5 mass % and not more than 0.9 mass % of C, and
   not less than 12.0 mass % and not more than 17.0 mass % of Cr, and
   the balance being Ni and incidental impurities,
   is applied to the metallic base material on a non-end region other than the end region.
(2) In the alloy-coated boiler component of the present invention, it is preferable that a thickness of the melted coating with each of the first alloy material and the second alloy material is between 0.3 and 3.0 mm.
(3) Further, it is preferable that the alloy-coated boiler component is welded with an alloy material of which main constituent is Ni-Cr including not more than 0.1 mass % of B and not more than 0.5 mass % of Si as a filler metal.
(4) It is preferable that the alloy-coated boiler component of the present invention is a boiler tube in which a coating with the alloy material (the first alloy material or the second alloy material) is applied to a periphery of a tubular metallic base material.
(5) In this case, it is preferable that the end region is a region between the end (both ends) of the boiler tube and a location spaced 15 to 500mm from this end, and the melted coating with the first alloy material is applied to the periphery of the metallic base material in the end region.
(6) It is preferable that the alloy-coated boiler component of the present invention is a boiler furnace panel.
(7) In this case, it is preferable that the coating with the alloy material (the first alloy material or the second alloy material) is applied to at least one side of the panel shaped metallic base material where tube materials and plate materials are joined alternately so that the plate materials are located on both sides.
(8) In this case, it is preferable that the end region is a region between the end (both ends) of the tube material and a location spaced 15 to 500mm from this end, and the melted coating with the first alloy material is applied to at least one side of this end region (at least one side of the panel shape),
   the end region is a region between the end (both ends) of the plate material and a location spaced 15 to 500mm from this end, and the melted coating with the first alloy material is coated on at least one side of this end region,
   the end region is a region including the plate materials on both sides of the boiler furnace panel, and the melted coating with the first alloy material is applied to at least one side of this end region, and
   the melted coating with the second alloy material is applied to at least one side of the metallic base material on the non-end region other than the end region (at least one side of the panel shape to which the melted coating with the first alloy material is applied).
(9) In this case, it is preferable that the coating with the alloy material (the first alloy material or the second alloy material) is applied to one side of the panel shaped metallic base material where tube materials and plate materials are joined alternately so that the plate materials are located on both sides.
(10) In this case, it is preferable that the end region is a region between the end (both ends) of the tube material and a location spaced 15 to 500mm from this end, and the melted coating with the first alloy material is applied to one side of this end region (one side of the panel shape),
   the end region is a region between the end (both ends)of the plate material and a location spaced 15 to 500mm from this end, and the melted coating with the first alloy material is applied to one side of this end region,
   the end region is a region including the plate materials on both sides of the boiler furnace panel, and the melted coating with the first alloy material is applied to one side of this end region, and
   the melted coating with the second alloy material is applied to one side of the metallic base material on the non-end region other than the end region (one side of the panel shape).
(11) In the alloy-coated boiler component of the present invention, it is preferable that the proportion of B in the first alloy material is not less than 1.8 mass % and not more than 2.4 mass %, the proportion of Si in the first alloy material is not less than 3.6 mass % and not more than 4.0 mass %, and the proportion of C in the first alloy material is not more than 0.2 mass %.
(12) Further, it is preferable that the proportion of Cr in the first alloy material is not less than 14.5 mass % and not more than 16.5 mass %.

### Advantageous Effects of Invention

Since the alloy-coated boiler component of the present invention has melted coatings with the self-fluxing alloys which can be formed by thermal spraying-fusing treatment on the whole area including the end region of the metallic base material to be protected, it is possible to manufacture it with high efficiency. Further, since it is not necessary to perform weld surfacing for forming the coating, there is no fear that welding distortion would occur in the metallic base material when manufacturing.
Further, since the melted coating formed on the end region has good thermal shock resistance and resistance to shock, thermal shock cracking hardly occurs even if the local temperature rises rapidly at the time of the welding operation and cracking hardly occurs against mechanical shock.
Further, the alloy-coated boiler component of the present invention is also superior in durability and corrosion resistance.

### Brief Description of Drawing

[FIG. 1A] FIG. 1A is an explanation view showing one configuration of a boiler furnace panel according to one embodiment of the boiler component of the present invention, and (a) is a front view, (b) is a side view, (c) is a substantial part enlarged front view, and (d) is a substantial part enlarged side view.
[FIG. 1B] FIG. 1B is an explanation view showing one configuration of a boiler furnace panel according to one embodiment of the boiler component of the present invention, and (e) is an A cross section view shown in (c) and (d) in FIG. 1A and (f) is a front view showing a state in which a plurality of boiler furnace panels are joined.
[FIG. 2] FIG. 2 is an explanation view showing manufacturing steps of the boiler furnace panel (a steel panel which is a metallic base material) shown in FIG. 1A and FIG. 1B, and (a) is a front view and (b) is a side view.
[FIG. 3] FIG. 3 is an explanation view showing manufacturing steps of the boiler furnace panel (steps for forming a coating on the end region of the steel panel) shown in FIG. 1A and FIG. 1B, and (a) is a substantial part enlarged front view and (b) is a substantial part enlarged side view.
[FIG. 4] FIG. 4 is an explanation view showing manufacturing steps of the boiler furnace panel (steps for forming a coating on the non-end region of the steel panel) shown in FIG. 1A and FIG. 1B, and (a) is a substantial part enlarged front view, (b) is a substantial part enlarged side view, (c) and (e) are front views, and, (d) and (f) are side views.
[FIG. 5] FIG. 5 is an explanation view showing manufacturing steps of the boiler furnace panel (steps for cutting off an uncoated portion) shown in FIG. 1A and FIG. 1B, and (a) is a substantial part enlarged front view and (b) is a substantial part enlarged side view.
[FIG. 6] FIG. 6 is an explanation view showing a usage pattern (welding) of the boiler furnace panel shown in FIG. 1A and FIG. 1B, and (a) is a cross section view of the end (welding portion) before welding and (b) is an enlarged cross section view of the end (welding portion) after welding.
[FIG. 7] FIG. 7 is an explanation view showing a boiler tube according to another embodiment of the boiler component of the present invention, and (a) shows a state before welding and (b) shows a state after welding.
[FIG. 8] FIG. 8 is an explanation view showing another configuration of a boiler furnace panel according to one embodiment of the boiler component of the present invention, and (a) is a front view, (b) is a side view, (c) is a substantial part enlarged front view, and (d) is a substantial part enlarged side view.

### Description of Embodiments

A boiler component of the present invention will now be described in detail below. The boiler component of the present invention is an alloy-coated boiler component in which a coating (coat) with an alloy material of which main constituent is Ni-Cr is applied to a metallic base material and an end is welded.

In the boiler component of the present invention, the alloy material (self-fluxing alloy) constituting the coating in an end region of the metallic base material is different from that in a non-end region of the metallic base material.

### <end region and non-end region>

Here, "the end region" is a region including the end (welding portion) and the proximity of the end, where the temperature rises rapidly in association with welding the end. The range of the end region differs according to a shape of the metallic base material (a form of the boiler component) or the like.

For example, in the boiler tube, the end region can be a region between the end and a location spaced 15 to 500mm from this end.

Further, in the boiler furnace panel where tube materials and plate materials are joined alternately so that the plate materials are located on both sides, the end region can be (1) a region between the end of the tube material and a location spaced 15 to 500mm from this end, (2) a region between the end of the plate material and a location spaced 15 to 500mm from this end, and (3) regions including the plate materials located on both sides (which may include a part of the tube materials welded to each of the plate materials located on both sides).

Further, "the non-end region" is a region other than the end region in the metallic base material to be protected.

### <first alloy material>

The melted coating with the first alloy material comprising not less than 1.5 mass % and not more than 2.5 mass % of B (boron), not less than 3.5 mass % and not more than 4.0 mass % of Si (silicon), not more than 0.4 mass % of C (carbon) , and not less than 12.0 mass % and not more than 17.0 mass % of Cr (chromium), and the balance being Ni (nickel) and incidental impurities is applied to the end region of the metallic base material.

The first alloy material is a Ni-Cr self-fluxing alloy comprising not less than 1.5 mass % of B and not less than 3.5 mass % of Si.

The melting point of the first alloy material is, for example, between 1050 and 1100 °C, and since such an alloy as having a melting point of this level can avoid distortion in the metallic base material in association with fusing treatment of a thermal spray coat, it is possible to apple a coating by thermal spraying-fusing treatment.

As a result, since the melted coatings can be formed by thermal spraying-fusing treatment on the whole area including the end region of the metallic base material to be protected, it is possible to manufacture alloy-coated boiler components with high efficiency.

Further, since the proportion of B is not more than 2.5 mass %, the proportion of Si is not more than 4.0 mass %, and they are small amounts (the contents of B and Si are low to some extent) compared to the contents of B and Si of a second alloy material to be hereinafter described, the melted coating formed with the first alloy material has good thermal shock resistance. Accordingly, thermal shock cracking hardly occurs on the melted coating with the first alloy material applied to the end region even if the local temperature rises rapidly at the time of the welding operation.
Further, since the contents of B and Si are low to some extent and the proportion of C is not more than 0.4 mass %, the hardness of the melted coating is sufficiently low (for example, HV ≦ 400) and resistance to shock improves so that even if subjected to mechanical shock when the boiler component is welded or attached, cracking hardly occurs on this melted coating.

The proportion of B in the first alloy material is not less than 1.5 mass % and not more than 2.5 mass %, and preferably not less than 1.8 mass % and not more than 2.4 mass %.
Since if the proportion of B is less than 1.5 mass %, the melting point of the resultant alloy material cannot be lowered sufficiently, distortion occurs in the metallic base material when the thermal spray coat with this alloy material is to be remelted, it is not possible to apply a coating utilizing this alloy material by thermal spraying-fusing treatment.
On the other hand, with the alloy material comprising more than 2.5 mass % of B, it is difficult to form a melted coating with good thermal shock resistance and resistance to shock on the end region.

The proportion of Si in the first alloy material is not less than 3.5 mass % and not more than 4.0 mass %, and preferably not less than 3.6 mass % and not more than 4.0 mass %.
Since if the proportion of Si is less than 3.5 mass % the melting point of the resultant alloy material cannot be lowered sufficiently, distortion occurs in the metallic base material when the thermal spray coat with this alloy material is to be remelted, it is not possible to apply a coating utilizing this alloy material by thermal spraying-fusing treatment.
On the other hand, with the alloy material comprising more than 4.0 mass % of Si, it is difficult to form a melted coating with good thermal shock resistance and resistance to shock on the end region.

The proportion of C in the first alloy material is not more than 0.4 mass %, and preferably not more than 0.2 mass %.

With the alloy material comprising more than 0.4 mass % of C, it is difficult to form a melted coating with good resistance to shock and having a low hardness on the end region.

Further, since the first alloy material includes Cr in a specific proportion, a melted coating formed on the end region is superior in corrosion resistance.

The proportion of Cr in the first alloy material is not less than 12.0 mass % and not more than 17.0 mass %, and preferably not less than 14.5 mass % and not more than 16.5 mass %.

With the alloy material comprising less than 12.0 mass % of Cr, a melted coating with good corrosion resistance cannot be formed on the end region.

### <second alloy material>

The melted coating with the second alloy material comprising more than 2.5 mass % and not more than 4.0 mass % of B, more than 4.0 mass % and not more than 5.0 mass % of Si, not less than 0.5 mass % and not more than 0.9 mass % of C, and not less than 12.0 mass % and not more than 17.0 mass % of Cr, and the balance being Ni and incidental impurities is applied to the non end region of the metallic base material.

The second alloy material is a Ni-Cr self-fluxing alloy comprising more than 2.5 mass % and not more than 4.0 mass % of B and more than 4.0 mass % and not more than 5.0 mass % of Si.
The melting point of the second alloy material is, for example, between 1000 and 1050 C, and since the alloy has such a low melting point as this, thermal spraying-fusing treatment can be performed efficiently.

Further, since the second alloy material comprises more than 2.5 mass % of B and more than 4.0 mass % of Si, the melted coating formed with this second alloy material is inferior in thermal shock resistance compared to that formed with the first alloy material.

However, since the melted coating with the second alloy material is applied to the non-end region where the temperature does not rise rapidly (thermal shock is not given) even at the time of the welding operation, thermal shock cracking hardly occurs on this melted coating even at the time of the welding operation.

Further, since the second alloy material comprises some high proportions of B, Si and C, the melted coating formed with the second alloy material is high in hardness (for example, HV = about 600 to 700) and is inferior in resistance to shock compared to the melted coating formed with the first alloy material.
However, since the non-end region where the melted coating with the second alloy material is applied to is hardly subjected to mechanical shock even when the boiler component is welded or attached, cracking hardly occurs.

The proportion of B in the second alloy material is more than 2.5 mass % and not more than 4.0 mass %. If the proportion of B is not more than 2.5 mass %, thermal spraying-fusing treatment cannot be performed efficiently.
On the other hand, the alloy material comprising more than 4.0 mass % of B will lead to lowering of thermal shock resistance and resistance to shock in the melted coating formed on the non-end region.

The proportion of Si in the second alloy material is more than 4.0 mass % and not more than 5.0 mass %. If the proportion of Si is not more than 4.0 mass %, thermal spraying-fusing treatment cannot be performed efficiently.
On the other hand, the alloy material comprising more than 5.0 mass % of Si will lead to lowering of thermal shock resistance and resistance to shock in the melted coating formed on the non-end region.

The proportion of C in the second alloy material is not less than 0.5 mass % and not more than 0.9 mass %.

With the alloy material comprising more than 0.9 mass % of C, hardness in the formed melted coating becomes excessively high, and resistance to shock on the non-end region will be damaged.

Further, since the second alloy material comprises Cr in a specific proportion, a melted coating formed on the non-end region is superior in corrosion resistance.

The proportion of Cr in the second alloy material is not less than 12.0 mass % and not more than 17.0 mass %.

With the alloy material comprising less than 12.0 mass % of Cr, a melted coating with good corrosion resistance cannot be performed on the non-end region.

Preferred second alloy materials include a nickel self-fluxing alloy material having composition defined in JIS H 8303 and a nickel self-fluxing alloy material having composition defined in ISO 14920.

### <boiler furnace panel>

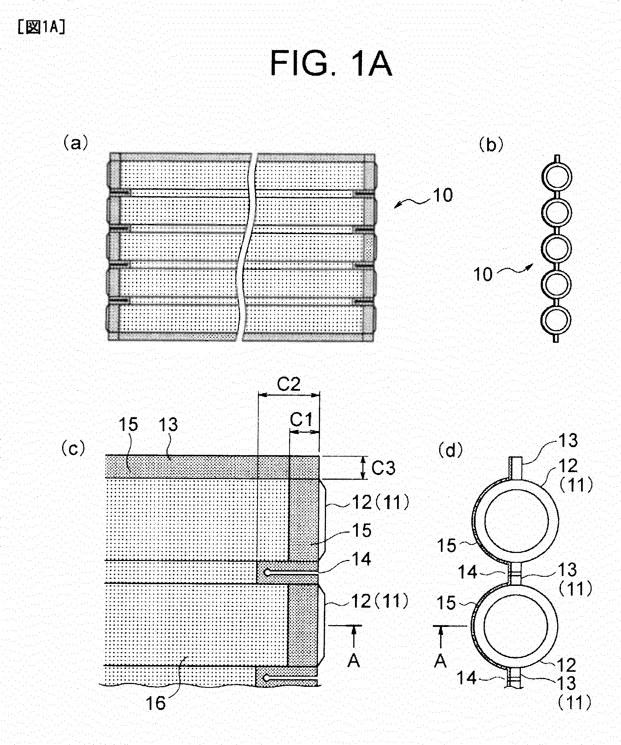

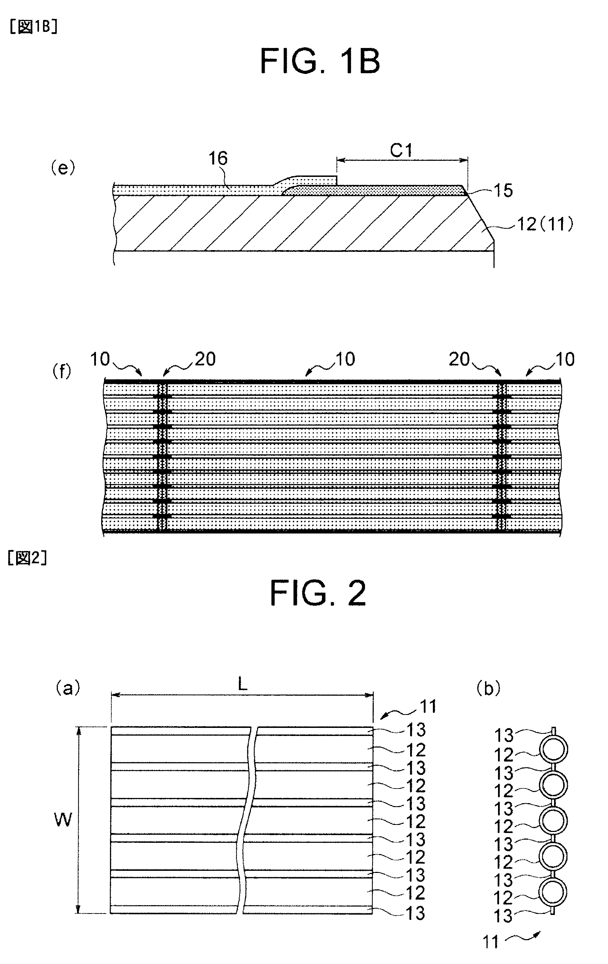

The boiler furnace panel 10 (alloy-coated boiler component of the present invention) shown in FIG. 1A and FIG. 1B is one in which a coating with the first alloy material (hereinafter referred to as "first alloy coating") 15 and a coating with the second alloy material (hereinafter referred to as "second alloy coating") 16 are formed to a steel panel 11 (metallic base material) by thermal spraying-fusing treatment at a factory previously, and when assembling a furnace housing, neighboring ends are welded each other while joining a plurality of panels. That is, a steel panel 11 (plate material - tube material composite panel) is constituted such that, in order to form a base unit for a furnace housing with a cooling water passage, a tube portion 12 (tube material) forming a cooling water passage and a plate portion 13 (plate material) forming a joint portion are arranged alternately and joined tightly with welding or the like and further, for erosion resistance and corrosion resistance, at one side (a portion to be protected) to be a furnace inner wall, a melted coating with the alloy material (the first alloy material or the second alloy material) is formed on the whole area except for portions to be welded.

The melted coatings are separates into the first alloy coating 15 on the end region and the second alloy coating 16 on the non-end region.
The end region applied with the first alloy coating 15 can be set as follows:
(1) a region between the end of the tube portion 12 and a location spaced 15 to 500mm from this end (a zonal region having a width indicated as C1 in the drawings),
(2) a region between the end of the plate portion 13 and a location spaced 15 to 500mm from this end (a region having a width indicated as C2 in the drawings), and
(3) regions including the plate portions 13 located on both sides (a zonal region having a width indicated as C3 in the drawings. Further, it may include a part of the tube portion 12 welded to each of the plate portions 13 located on both sides).

Further, the width C1 of the end region in the tube portion 12 and the width C2 of the end region in the plate portion 13 may be the same size.

On the end region of the plate portion 13, a thin notch 14 with a width of about 0.5 to 2 mm is formed. It is to secure a deflection margin for welding to align the tube portion 12.
On an end surface of the tube portion 12, a large bevel (chamfer) or taper is also provided to become a welding groove.

Since the first alloy material constituting the first alloy coating 15 has Ni-Cr as a main constituent and comprises B and Si which are melting point lowering elements in a certain proportion, it has a self-fluxing property, however, the proportions of B and Si are low such that B is not more than 2.5 mass % and Si is not more than 4.0 mass % so that cracking would not occur owing to thermal shock at the time of the welding operation and various mechanical shocks.
A thickness of the first alloy coating 15 is between 0.3 and 3.0 mm and preferably between about 1.0 and 2.0 mm.

The second alloy material constituting the second alloy coating 16 has Ni-Cr as a main constituent and comprises more than 2.5 mass % and not more than 4.0 mass % of B and more than 4.0 mass % and not more than 5.0 mass % of Si in order to be applied efficiently by thermal spraying process and fusing treatment.
A thickness of the second alloy coating 16 is between 0.3 and 3.0 mm and preferably between about 1.0 and 2.0 mm.

Manufacturing steps of the boiler furnace panel 10 of this embodiment will be described referring to the drawings (FIGs. 2 to 5).

The boiler furnace panel 10 can be manufactured such that the first alloy coating 15 is formed on one side of the end region of the steel panel 11 (metallic base material) which are the plate portions 13 and the tube portions 12 are joined alternately, in accordance with this, the second alloy coating 16 is formed on one side of the non-end region, and further, the end shape is finished.

As shown in FIG. 2, the steel panel 11 is made by joining the tube portions 12 and the plate portions 13 consisting of steel materials alternately by welding or the like, and the plate portions 13 are located on both sides.
As sizes of the steel panel 11, a length (L) is between about 1000 and 9000 mm, a width (W) is between about 300 and 500 mm, a diameter of the tube portion 12 is between about 30 and 80 mm, a thickness of the tube portion 12 is between about 5.0 and 7.0 mm, and a thickness of the plate portion 13 is about 3 and 9 mm.

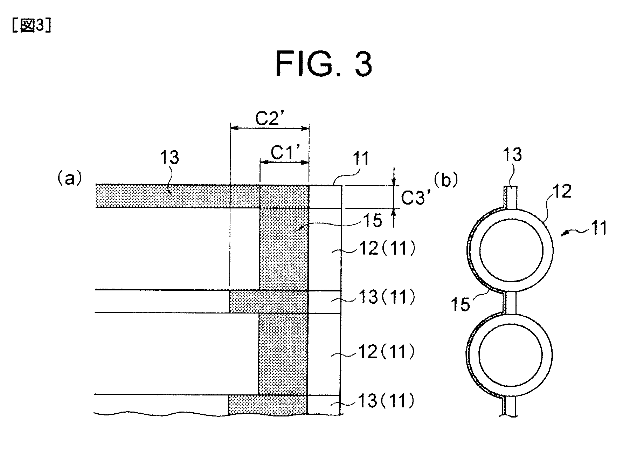

As shown in FIG. 3, the first alloy coating 15 is formed on one side of the end region of the steel panel 11. Further, about 50 to 150 mm of the tip portion sometimes remains without having coating process for fixation, holding, etc. during the operation, however, in that case, it is cut off at the time of finishing the end shape.
As shown in FIG. 3 (a), a width (indicated as C1' in FIG. 3 (a)) of a region forming the first alloy coating 15 in the tube portion 12 is wider than the width (indicated as C1 in FIG. 1) of the end region in order to secure an overlapping (lap) portion with the second alloy coating.
Further, a width (indicated as C2' in FIG. 3) of a region forming the first alloy coating 15 in the plate portions 13 sandwiched between the tube portions 12 is also wider than the width (indicated as C2 in FIG. 1) of the end region in order to secure the overlapping portion with the second alloy coating.
Further, a width (indicated as C3' in FIG. 3 (a)) of a region forming the first alloy coating 15 in the plate portions 13 located on both sides of the panel is equal to the width of the end region indicated as C3 in FIG. 1, however, it is possible to further widen the width of the region forming the first alloy coating 15, that is to say, to form the first alloy coating 15 to a part of the tube portion 12 joined to the plate portions 13 located on both sides of the panel.

The first alloy coating 15 is formed by thermal spraying-fusing treatment. As thermal spraying-fusing treatment, conventional known process can be adopted. Specifically, thermal spraying process of the first alloy material on the end region and fusing treatment of the thermal spray coat with the first alloy material are performed. Further, surface cleaning process such as shot blasting or the like can be performed on a processed surface (one side of the end region), if needed.
The thermal spray coat formed by thermal spraying-fusing treatment with the first alloy material is remelted at the temperature of about 1050 to 1100°C to be a tight melted coating (the first alloy coating 15).

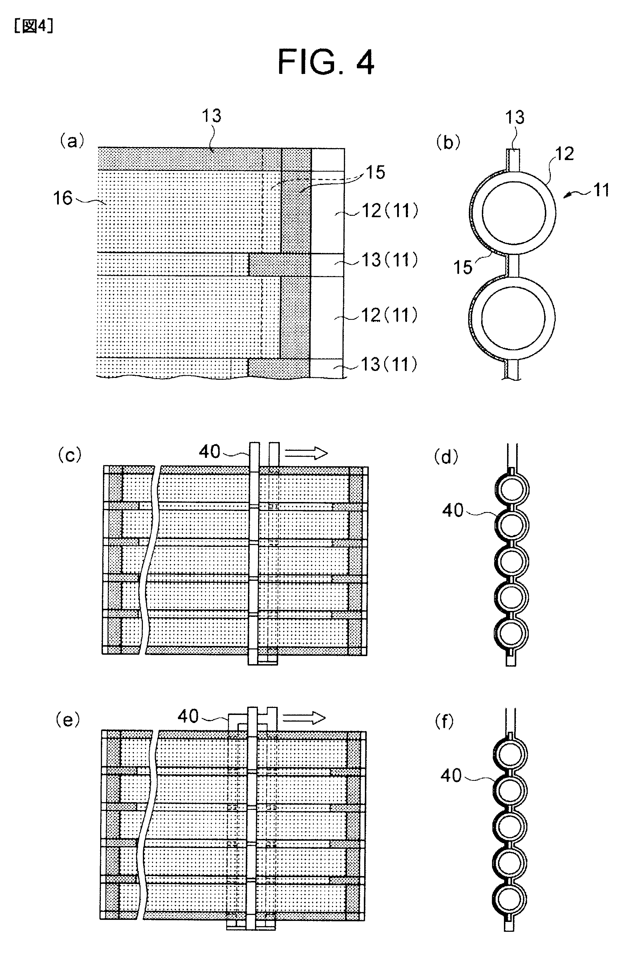

As shown in FIG. 4, the second alloy coating 16 is formed on one side of the non-end region of the steel panel 11.

The second alloy coating 16 is formed by thermal spraying-fusing treatment in the same way as the first alloy coating 15. As thermal spraying-fusing treatment, conventional known process can be adopted. Specifically, masking of the first alloy coating 15, thermal spraying process of the second alloy material on the non-end region and then fusing treatment of the thermal spray coat with the second alloy material are performed. Further, surface cleaning process such as shot blasting or the like can be performed on a processed surface (one side of the non-end region), if needed.

The thermal spray coat formed by thermal spraying-fusing treatment with the second alloy material is remelted at the temperature of about 1000 to 1050°C to be a tight melted coating (the second alloy coating 16).

Further, preferable methods for forming the first alloy coating 15 and the second alloy coating 16 include a method in which thermal spraying process with the first alloy material is performed on the end region, thermal spraying process with the second alloy material is performed on the non-end region and then fusing treatment of the thermal spray coats formed on the end region and the non-end region is performed. Further, in fusing treatment of the thermal spray coats, temperature is controlled so that the process temperature (about 1050 to 1100^{°}C) for the thermal spray coat with the first alloy coating 15 and the process temperature (about 1000 to 1050°C) for the thermal spray coat with the second alloy coating 16 is switched appropriately.

Masking of the first alloy coating 15 is performed, for example, by utilizing shielding plates such as sheet metal or the like, or heat-resistant masking tapes. Further, masking is performed such that a part of the first alloy coating 15 and a part of the second alloy coating 16 are overlapping in order not to expose a base material in a clearance between the first alloy coating 15 and the second alloy coating 16. In such an overlapping portion, it is better to provide a taper in thickness of both coatings so that a steep step would not appear.

Thermal spraying process and fusing treatment for forming the first alloy coating 15 and the second alloy coating 16 are performed by a common technique utilizing a known device.
That is, the thermal spraying of the first alloy material and the second alloy material which are self-fluxing alloys can be performed efficiently by a common technique utilizing a known device.
Further, basically, fusing treatment also can be performed efficiently utilizing a known high-frequency induction heater by a common moving heating method (for example, as shown in FIGs. 4 (c) and (e), a method for moving an induction coil 40).

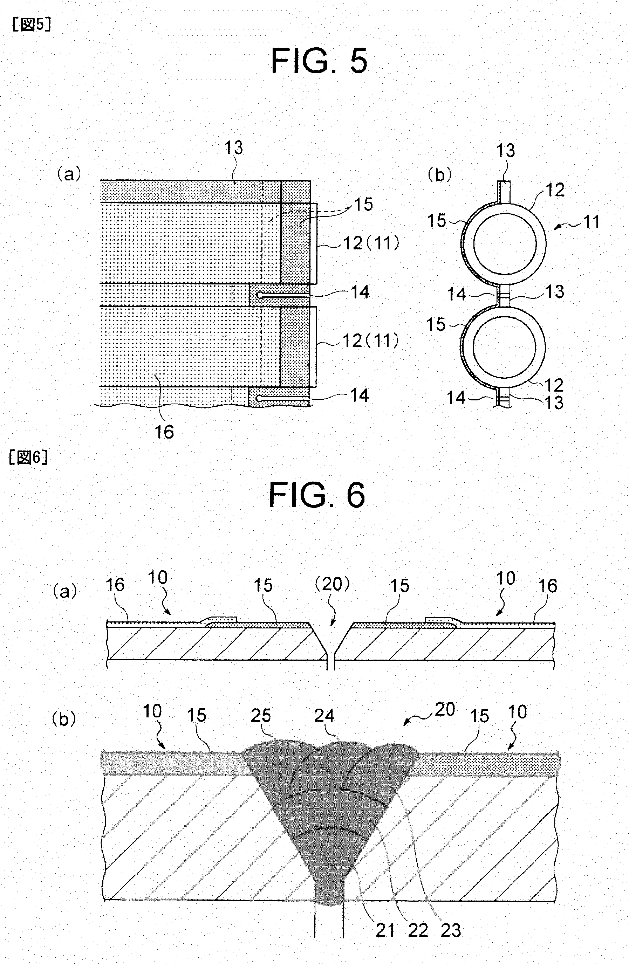

After the first alloy coating 15 and the second alloy coating 16 are formed on one side of the steel panel 11 (end region and non-end region), an uncoated portion at a tip of the steel panel 11 is cut off as shown in FIG. 5. This is performed by the plasma cutting or the like and at the same time or another time, a notch 14 is formed. Further, in preparation for welding another boiler furnace panel 10, a tip of the tube portion 12 is beveled (chamfered).
Thus, when terminating the finishing of the ends, one of the boiler furnace panels 10 is completed. Further, similarly, the boiler furnace panels 10 are efficiently manufactured one after another, and then they are stacked to be kept in a factory, warehouse and so on.
As described above, in manufacturing steps for this boiler furnace panel 10, since all the melted coatings (the first alloy coating 15 and the second alloy coating 16) can be formed by thermal spraying-fusing treatment, it is far superior in manufacturing efficiency compared to manufacturing steps combining with weld surfacing.

Next, a usage pattern of the boiler furnace panel 10 of this embodiment will be described referring to a drawing (FIG. 6).

Since a plurality of boiler furnace panels 10 are welded to be assembled into a boiler furnace, here, welding steps for welding in a manner joining the boiler furnace panels 10 each other in a length direction (communicating bores (interior portions) of the tube portions 12 each other) will be described.

The welding steps comprise positioning (aligning) steps, tube end welding steps and plate portion welding steps, and in that order, a treatment of each step is applied to a welding portion 20 of a pair of boiler furnace panels 10 to be joined. As shown in FIG. 6 (a), in the positioning steps, both boiler furnace panels 10 are fixed in a state in which the tips of tube portions 12 to become the welding portions 20 face each other. Then, if there is a position gap in a state in which tube ends face each other and the position gap is slight resulting from the time of manufacturing the boiler furnace panel 10 (the time of forming the first alloy coating 15 and the second alloy coating 16) or the like, the positions of the faced tube end are aligned by driving a small wedge into the notch 14, or the like.

Next, as shown in FIG. 6 (b), in tube end welding steps, the annular welding is performed from a tube inner surface side to a tube outer surface side for several times separately in order not to generate any voids or the like and in order not to overheat. In the shown example, there are five layers separately, and the annular welding starts from a welding layer 21 facing the hollow of the tube, followed by a welding layer 22 buried in the tube wall and further three columns of super alloy welding layers 23, 24 and 25 exposed on the tube outer periphery sequentially one after another.

As for a filler metal (a filler metal used for forming super alloy welding layers 23, 24 and 25) used in these tube end welding steps, an alloy material of which main constituent is Ni-Cr including not more than 0.1 mass % of B and not more than 0.5 mass % of Si is preferable.
Further, a welding layer (corresponding to the welding layer 21) facing the hollow of the tube and a welding layer (corresponding to the welding layer 22) buried in the tube wall can be formed with carbon steel (for example, a filler rod of 50kg/mm² class), and accordingly, costs can be reduced.

Here, since the first alloy coating 15 formed on the end region of the boiler furnace panel 10 comprises less of B and Si and is superior in thermal shock resistance (having no sensitivity in thermal shock cracking) compared to the second alloy coating 16 formed on the non-end region, thermal shock cracking does not occur on the first alloy coating 15 even if the temperature rises rapidly on the end region at the time of the welding operation. Therefore, it is possible to perform the welding operation easily and appropriately without damaging the first alloy coating 15.

Further, though the second alloy coating 16 formed on the non-end region of the boiler furnace panel 10 is inferior in thermal shock resistance (having sensitivity in thermal shock cracking) compared to the first alloy coating 15, since it is applied to the non-end region where the temperature does not rise rapidly (thermal shock is not given) even at the time of the welding operation, thermal shock cracking does not occur in the second alloy coating 16, either. Therefore, it is possible to perform the welding operation easily and appropriately without damaging the second alloy coating 16.

Next, in plate portion welding steps, although illustration is omitted, a cover plate with a size for covering at least both notches 14 in the plate portions 13 to be welded is welded over the plate portions 13 of the both boiler furnace panels 10. Welding of the cover plate is performed from the other side of the steel panel 11 (that is, a surface where the first alloy coating 15 is not formed, a furnace outer wall surface or a surface which does not need protection). Since the width of the notch 14 is narrow and it is easy to change the cover plates, steps may be terminated by leaving an inner side of the notch 14 being the base metal as it is, that is, the steel panel 11 is exposed as it is, however, the notch 14 may be filled up in welding application utilizing the filler metal (the alloy material of which main constituent is Ni-Cr including not more than 0.1 mass % of B and not more than 0.5 mass % of Si). Further, since in the plate portion 13, differently from the tube portion 12, it is easy to perform the maintenance and repair after the boiler has been constructed (it is possible to achieve the purpose roughly even with the maintenance and repair performed from outside the boiler), a procedure may be adopted in which a plate thickness of a panel end plate or the cover plate is thickened to realize long service life and then the alloy coating is omitted.

Accordingly, the furnace housing with cooling water passage can be constructed as shown in FIG. 1B(f), by joining the plurality of boiler furnace panels 10 in the length direction.

In such a furnace housing, since the entire inner wall surfaces or the whole area of the portion to be protected of the inner wall surfaces are covered with a tight alloy coating, erosion resistance and corrosion resistance are improved significantly.

Further, it is possible to join the plurality of boiler furnace panels 10 in the width direction, having the plate portions 13 located on both sides of each as the welding portions, utilizing the filler metal.
Then, since the boiler furnace panel 10 has the first alloy coating 15 superior in thermal shock resistance formed on a region including the plate portions 13 located on both sides as the end region, even in welding steps for joining boiler furnace panels 10 in the width direction, thermal shock cracking does not occur in the first alloy coating 15 formed on the end region including the plate portions 13 located on both sides.

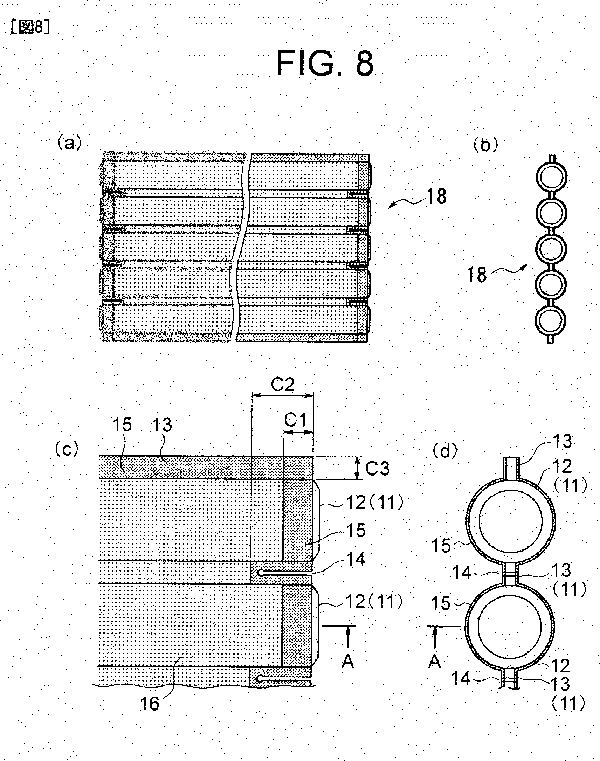

FIG. 8 shows a boiler furnace panel (alloy-coated boiler component of the present invention) different in construction from that shown in FIG. 1A and FIG. 1B. Further, in FIG. 8, component parts and elements identical to those of the boiler furnace panel 10 shown in FIG. 1A and FIG. 1B are denoted by identical reference numerals.
The boiler furnace panel 18 shown in FIG. 8 has melted coatings with alloy materials (a first alloy material and a second alloy material) formed on the whole area, except portions to be welded, in one side and the other side.
That is, in the boiler furnace panel 18, the first alloy coating 15 is formed on each of one side and the other side of the end region of the steel panel 11 (metallic base material) where the plate portions 13 and the tube portions 12 are joined alternately, and in accordance with this, the second alloy coating 16 is formed on each of one side and the other side of the non-end region.
This boiler furnace panel 18 can be used preferably as a panel of which both sides are portions to be protected (for example, a boundary panel partitioning a first combustion room and a second combustion room) or the like.

### <boiler tube>

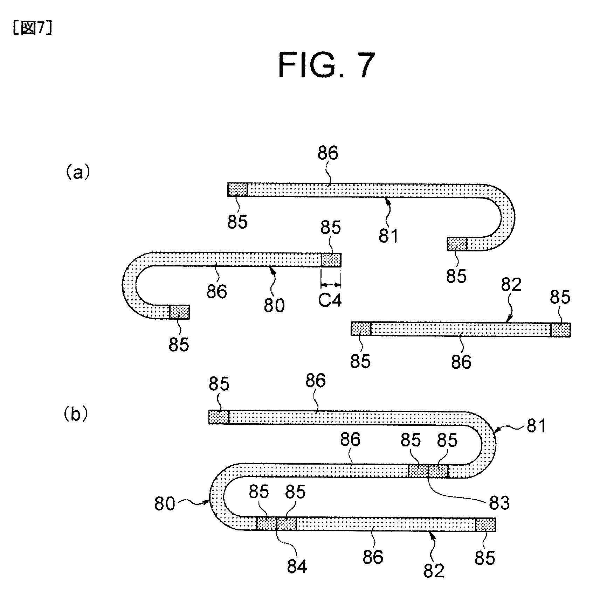

In boiler tubes 80, 81 and 82 (the alloy-coated boiler components of the present invention) shown in FIG. 7 (a), coatings with the alloy materials are applied to the peripheries of the tubular steel materials (metallic base materials).
In the boiler tubes 80, 81 and 82, a first alloy coating 85 is formed on the periphery of each end region (a zonal region having a width indicated as C4 in the drawing), and in accordance with this, a second alloy coating 86 is formed on the periphery of each non-end region.
Here, the end region of the boiler tubes 80, 81 and 82 is a region where the temperature rises rapidly by welding and the width C4 of the end region is, for example, between 15 and 500 mm.
An outer diameter of the boiler tubes 80, 81 and 82 is between about 30 and 100 mm and a length of the boiler tube 82 is between about 2000 and 10000 mm.
The first alloy coating 85 is formed on the periphery of the end region of the tubular steel material by thermal spraying-fusing treatment utilizing the first alloy material. On the other hand, the second alloy coating 86 is formed on the periphery of the non-end region of the tubular steel material by thermal spraying-fusing treatment utilizing the second alloy material.

The boiler tubes 80, 81 and 82 can be manufactured such that the first alloy coating 85 is formed on the periphery of the end region of the tubular steel material (metallic base materials), in accordance with this, the second alloy coating 86 is formed on the periphery of the non-end region, and further, an end shape is finished.
Thermal spraying process and fusing treatment for forming the first alloy coating 85 and the second alloy coating 86 are performed by a common technique utilizing a known device.
That is, the thermal spraying of the first alloy material and the second alloy material which are self-fluxing alloys can be performed efficiently by a common technique utilizing a known device.
Further, fusing treatment includes a known method in which an induction coil connected to a high-frequency induction heater is fit loosely in the end region, inductively heated, and a thermal spray coat is remelted. Further, at the same time as fusing treatment, bending work may be performed.
As described above, in manufacturing steps for the boiler tubes 80, 81 and 82, since all the melted coatings (the first alloy coating 85 and the second alloy coating 86) can be formed by thermal spraying-fusing treatment, it is far superior in manufacturing efficiency compared to manufacturing steps combining with weld surfacing.

After necessary tube end treatments such as formation of a welding groove or the like have been carried out in each of the boiler tubes 80, 81 and 82, the boiler tubes 80, 81 and 82 are fixed in a state in which tips of the boiler tubes 80, 81 and 82 face each other at the welding portions 83 and 84, as shown in FIG. 7 (b).
Then, utilizing the above-mentioned filler metal (the filler metal consisting of the alloy material of which main constituent is Ni-Cr including not more than 0.1 mass % of B and not more than 0.5 mass % of Si), the tube ends are welded to each other. This tube end welding of the boiler tube is similar to the above-mentioned tube end welding of the tube portion 12.

Since the first alloy coating 85 formed on the end region of the boiler tubes 80, 81 and 82 comprises less of B and Si and is superior in thermal shock resistance (having no sensitivity in thermal shock cracking) compared to the second alloy coating 86 formed on the non-end region, thermal shock cracking does not occur on the first alloy coating 85 even if the temperature rises rapidly on the end region by welding. Further, the second alloy coating 86 which is inferior in thermal shock resistance (having sensitivity in thermal shock cracking) is formed on the non-end region where the temperature does not rise rapidly by welding, thermal shock cracking does not occur in the second alloy coating 86, either. Therefore, it is possible to perform the welding operation easily and appropriately without damaging the first alloy coating 85 and the second alloy coating 86.

### [Reference Signs List]

10 boiler furnace panel (alloy-coated boiler component)
11 steel panel (composite panel)
12 tube portion (tube material)
13 plate portion (plate material)
14 notch
15 first alloy coating
16 second alloy coating
18 boiler furnace panel (alloy-coated boiler component)
20 welding portion
21, 22 welding layer
23, 24, 25 super alloy welding layer
40 induction coil (high-frequency induction heater)
80, 82 boiler tube (alloy-coated boiler component)
83, 84 welding portion
85 first alloy coating
86 second alloy coating

## Claims

1. An alloy-coated boiler component (10) in which a coating with an alloy material is applied to a metallic base material and its end is to be welded,
wherein a melted coating with a first alloy material (15) comprising:
not less than 1.5 mass % and not more than 2.5 mass % of B,
not less than 3.5 mass % and not more than 4.0 mass % of Si,
not more than 0.4 mass % of C, and
not less than 12.0 mass % and not more than 17.0 mass % of Cr, and
the balance being Ni and incidental impurities,
is applied to the metallic base material on an end region including said end and its proximity, wherein the end region is a region, where the temperature rises rapidly in association with welding the end, and,
a melted coating of a second alloy material (16) comprising:
more than 2.5 mass % and not more than 4.0 mass % of B,
more than 4.0 mass % and not more than 5.0 mass % of Si,
not less than 0.5 mass % and not more than 0.9 mass % of C, and
not less than 12.0 mass % and not more than 17.0 mass % of Cr, and
the balance being Ni and incidental impurities,
is applied to the metallic base material on a non-end region other than said end region, wherein the melted coatings are obtainable by thermal spray-fusing treatment.

2. The alloy-coated boiler component as claimed in claim 1, wherein a thickness of the melted coating with each of the first alloy material and the second alloy material is between 0.3 and 3.0 mm.

3. The alloy-coated boiler component as claimed in any one of claims 1 or 2, wherein it is a boiler tube (80, 81, 82) in which the coatings with the alloy materials are applied to a periphery of a tubular metallic base material.

4. The alloy-coated boiler component (10) as claimed in claim 3, wherein the end region is a region between the end of said boiler tube and a location spaced 15 to 500mm from this end, and the melted coating with the first alloy material is applied to the periphery of the metallic base material in said end region.

5. The alloy-coated boiler component as claimed in any one of claims 1 or 2, wherein it is a boiler furnace panel (10, 18).

6. The alloy-coated boiler component as claimed in claim 5, wherein the coatings with the alloy materials are applied to at least one side of the panel shaped metallic base material where plate materials (13) and tube materials (12) are joined alternately so that the plate
materials are located on both sides of the tube materials, wherein the term "side of the panel shaped metallic base material" means the portion of the panel shaped metallic base material, which is to be protected.

7. The alloy-coated boiler component as claimed in claim 6,
wherein the end region is a region between the end of said tube material (12) and a location spaced 15 to 500mm from this end, and the melted coating with the first alloy material (15) is applied to at least one side of this end region,
the end region is a region between the end of said plate material (13) and a location spaced 15 to 500mm from this end, and the melted coating with the first alloy material is coated on at least one side of this end region,
the end region is a region including the plate materials on both sides of said boiler furnace panel, and the melted coating with the first alloy material is applied to at least one side of this end region, and
the melted coating with the second alloy material (16) is applied to at least one side of the metallic base material on the non-end region other than said end region.

8. The alloy-coated boiler component as claimed in claim 5, wherein the coatings with the alloy materials are applied to one side of the panel shaped metallic base material where plate materials and tube materials are joined alternately so that the plate materials (13) are located on both sides of the tubes materials (12), wherein the term "side of the panel shaped metallic base material" means the portion of the panel shaped metallic base material, which is to be protected.

9. The alloy-coated boiler component as claimed in claim 8,
wherein the end region is a region between the end of said tube material) (12) and a location spaced 15 to 500mm from this end, and the melted coating with the first alloy material (15) is applied to one side of this end region,
the end region is a region between the end of said plate material (13) and a location spaced 15 to 500mm from this end, and the melted coating with the first alloy material is applied to one side of this end region,
the end region is a region including the plate materials on both sides of said boiler furnace panel, and the melted coating with the first alloy material is applied to one side of this end region, and
the melted coating with the second alloy material (16) is applied to one side of the metallic base material on the non-end region other than said end region.

10. The alloy-coated boiler component as claimed in claim 1, wherein the proportion of B in said first alloy material is not less than 1.8 mass % and not more than 2.4 mass %, the proportion of Si in said first alloy material is not less than 3.6 mass % and not more than 4.0 mass %, and the proportion of C in said first alloy material is not more than 0.2 mass %.

11. The alloy-coated boiler component as claimed in claim 1, wherein the proportion of Cr in said first alloy material is not less than 14.5 mass % and not more than 16.5 mass %.

## Patentansprüche

1. Legierungsbeschichtete Boilerkomponente (10), auf der eine Beschichtung mit einem Legierungsmaterial auf ein metallisches Basismaterial, an dessen Ende geschweißt wird, aufgetragen ist,
wobei eine geschmolzene Beschichtung mit einem ersten Legierungsmaterial (15), umfassend:
nicht weniger als 1,5 Massen-% und nicht mehr als 2,5 Massen-% B,
nicht weniger als 3,5 Massen-% und nicht mehr als 4,0 Massen-% Si,
nicht mehr als 0,4 Massen-% C, und
nicht weniger als 12,0 Massen-% und nicht mehr als 17,0 Massen-% Cr, wobei der Rest Ni und anfallende Verunreinigungen ist,
auf das metallische Basismaterial auf einer Endregion, beinhaltend besagtes Ende und seine Umgebung, aufgetragen ist, wobei die Endregion eine Region ist, an der die Temperatur schnell in Verbindung mit dem Schweißen des Endes steigt, und,
wobei eine geschmolzene Beschichtung eines zweiten Legierungsmaterials (16), umfassend:
mehr als 2,5 Massen-% und nicht mehr als 4,0 Massen-% B,
mehr als 4,0 Massen-% und nicht mehr als 5,0 Massen-% Si,
nicht weniger als 0,5 Massen-% und nicht mehr als 0,9 Massen-% C, und
nicht weniger als 12,0 Massen-% und nicht mehr als 17,0 Massen-% Cr, wobei der Rest Ni und anfallende Verunreinigungen ist,
auf das metallische Basismaterial auf einer Nicht-Endregion, anders als besagte Endregion, aufgetragen ist, wobei die geschmolzenen Beschichtungen durch thermische Sprühverschmelzungsbehandlung erhältlich sind.

2. Die legierungsbeschichtete Boilerkomponente wie in Anspruch 1 beansprucht, wobei eine Dicke der geschmolzenen Beschichtung mit jedem des ersten Beschichtungsmaterials und des zweiten Beschichtungsmaterials zwischen 0,3 und 3,0 mm ist.

3. Die legierungsbeschichtete Boilerkomponente wie in irgendeinem der Ansprüche 1 oder 2 beansprucht, wobei sie ein Boilerrohr (80, 81, 82) ist, in dem die Beschichtungen mit den Beschichtungsmaterialien auf eine Peripherie eines röhrenartigen metallischen Basismaterials aufgetragen sind.

4. Die legierungsbeschichtete Boilerkomponente (10) wie in Anspruch 3 beansprucht, wobei die Endregion eine Region zwischen dem Ende von besagtem Boilerrohr und einem Ort, der von diesem Ende 15 bis 500 mm entfernt ist, ist, und die geschmolzene Beschichtung mit dem ersten Legierungsmaterial an der Umgebung des metallischen Basismaterials in besagter Endregion aufgetragen ist.

5. Die legierungsbeschichtete Boilerkomponente wie in irgendeinem der Ansprüche 1 oder 2 beansprucht, wobei sie ein Boilerofenpanel (10, 18) ist.

6. Die legierungsbeschichtete Boilerkomponente wie in Anspruch 5 beansprucht, wobei die Beschichtungen mit den Beschichtungsmaterialien auf mindestens einer Seite des panelartigen, metallischen Basismaterials aufgetragen sind, wobei Plattenmaterialien (13) und Röhrenmaterialien (12) alternierend verbunden sind, so dass sich die Plattenmaterialien auf beiden Seiten der Röhrenmaterialien befinden, wobei der Begriff "Seite des panelartigen, metallischen Basismaterials" der Anteil des panelartigen, metallischen Basismaterials, der zu schützen ist, bedeutet.

7. Die legierungsbeschichtete Boilerkomponente wie in Anspruch 6 beansprucht,
wobei die Endregion eine Region zwischen dem Ende von besagtem Röhrenmaterial (12) und einem Ort, der von diesem Ende 15 bis 500 mm entfernt ist, ist, und die geschmolzene Beschichtung mit dem ersten Legierungsmaterial (15) auf mindestens eine Seite dieser Endregion aufgetragen ist,
wobei die Endregion eine Region zwischen dem Ende von besagten Plattenmaterial (13) und einem Ort, der von diesem Ende 15 bis 500 mm entfernt ist, ist, und die geschmolzene Beschichtung mit dem ersten Legierungsmaterial auf mindestens eine Seite dieser Endregion beschichtet ist,
wobei die Endregion eine Region ist, beinhaltend die Plattenmaterialien an beiden Seiten von besagtem Boilerofenpanel, und die geschmolzene Beschichtung mit dem ersten Legierungsmaterial auf mindestens eine Seite dieser Endregion aufgetragen ist, und wobei die geschmolzene Beschichtung mit dem zweiten Legierungsmaterial (16) auf mindestens eine Seite des metallischen Basismaterials auf die Nicht-Endregion, die anders ist als besagte Endregion, aufgetragen ist.

8. Die legierungsbeschichtete Boilerkomponente wie in Anspruch 5 beansprucht, wobei die Beschichtungen mit den Legierungsmaterialien auf eine Seite des panelartigen, metallicschen Basismaterials, wo Plattenmaterialen und Röhrenmaterialien alternieren verbunden sind, aufgetragen sind, so dass die Plattenmaterialien (13) sich auf beiden Seiten der Röhrenmaterialien (12) befinden, wobei der Begriff "Seite des panelartigen metallischen Basismaterials" der Anteil des panelartigen, metallischen Basismaterials, der zu schützen ist, bedeutet.

9. Die legierungsbeschichtete Boilerkomponente wie in Anspruch 8 beansprucht,
wobei die Endregion eine Region zwischen dem Ende von besagten Röhrenmaterial (12) und einem Ort, der von diesem Ende 15 bis 500 mm entfernt ist, ist, und die geschmolzene Beschichtung mit dem ersten Legierungsmaterial (15) auf eine Seite dieser Endregion aufgetragen ist,
wobei die Endregion eine Region zwischen dem Ende von besagten Plattenmaterial (15) und einem Ort, der von diesem Ende 15 bis 500 mm entfernt ist, ist, und die geschmolzene Beschichtung mit dem ersten Legierungsmaterial auf eine Seite dieser Endregion aufgetragen ist,
wobei die Endregion eine Region ist, beinhaltend die Plattenmaterialien auf beiden Seiten von besagtem Boilerofenpanel, und die geschmolzene Beschichtung mit dem ersten Legierungsmaterial auf eine Seite dieser Endregion aufgetragen ist, und
wobei die geschmolzene Beschichtung mit dem zweiten Legierungsmaterial (16) auf eine Seite des metallischen Basismaterials an der Nicht-Endregion, die anders ist als besagte Endregion, aufgetragen ist.

10. Die legierungsbeschichtete Boilerkomponente wie in Anspruch 1 beansprucht, wobei der Anteil an B in besagtem ersten Legierungsmaterial nicht weniger als 1,8 Massen-% und nicht mehr als 2,4 Massen-% ist, wobei der Anteil an Si in besagtem ersten Legierungsmaterial nicht weniger als 3,6 Massen-% und nicht mehr als 4,0 Massen-% ist, und wobei der Anteil an C in besagtem ersten Legierungsmaterial nicht mehr als 0,2 Massen-% ist.

11. Die legierungsbeschichtete Boilerkomponente wie in Anspruch 1 beansprucht, wobei der Anteil an Cr in besagtem ersten Legierungsmaterial nicht weniger als 14,5 Massen-% und nicht mehr als 16,5 Massen-% ist.

## Revendications

1. Elément de chaudière revêtu d'alliage (10) dans lequel un revêtement avec un matériau d'alliage est appliqué sur un matériau de base métallique et son extrémité est destinée à être soudée,
dans lequel un revêtement fondu avec un premier matériau d'alliage (15) comprenant :
pas moins de 1,5 % en masse et pas plus de 2,5 % en masse de B,
pas moins de 3,5 % en masse et pas plus de 4,0 % en masse de Si,
pas plus de 0,4 % en masse de C, et
pas moins de 12,0 % en masse et pas plus de 17,0 % en masse de Cr, et
le reste étant du Ni et des impuretés fortuites,
est appliqué sur le matériau de base métallique sur une zone d'extrémité incluant ladite extrémité et son voisinage, où la zone d'extrémité est une zone où la température s'élève rapidement en association avec le soudage de l'extrémité, et,
un revêtement fondu d'un second matériau d'alliage (16) comprenant :
plus de 2,5 % en masse et pas plus de 4,0 % en masse de B,
plus de 4,0 % en masse et pas plus de 5,0 % en masse de Si,
pas moins de 0,5 % en masse et pas plus de 0,9 % en masse de C,
et
pas moins de 12,0 % en masse et pas plus de 17,0 % en masse de Cr, et
le reste étant du Ni et des impuretés fortuites, est appliqué sur le matériau de base métallique sur une zone de non-extrémité autre que ladite zone d'extrémité,
dans lequel les revêtements fondus peuvent être obtenus par un traitement de fusion-projection thermique.

2. Elément de chaudière revêtu d'alliage selon la revendication 1, dans lequel une épaisseur du revêtement fondu avec le premier matériau d'alliage et le second matériau d'alliage est comprise entre 0,3 et 3,0 mm.

3. Elément de chaudière revêtu d'alliage selon l'une quelconque des revendications 1 ou 2, dans lequel il s'agit d'un tube de chaudière (80, 81, 82) dans lequel les revêtements avec les matériaux d'alliage sont appliqués sur une périphérie d'un matériau de base métallique tubulaire.

4. Elément de chaudière revêtu d'alliage (10) selon la revendication 3, dans lequel la zone d'extrémité est une zone entre l'extrémité dudit tube de chaudière et un endroit écarté de 15 à 500 mm de cette extrémité, et le revêtement fondu avec le premier matériau d'alliage est appliqué sur la périphérie du matériau de base métallique dans ladite zone d'extrémité.

5. Elément de chaudière revêtu d'alliage selon l'une quelconque des revendications 1 ou 2, dans lequel il s'agit d'un panneau de foyer de chaudière (10, 18).

6. Elément de chaudière revêtu d'alliage selon la revendication 5, dans lequel les revêtements avec les matériaux d'alliage sont appliqués sur au moins un côté du matériau de base métallique en forme de panneau où les matériaux de plaque (13) et les matériaux de tube (12) sont assemblés de manière alternée de façon à ce que les matériaux de plaque soient situés des deux côtés des matériaux de tube, où le terme « côté du matériau de base métallique en forme de panneau » signifie la partie du matériau de base métallique en forme de panneau, qui est destinée à être protégée.

7. Elément de chaudière revêtu d'alliage selon la revendication 6, dans lequel la zone d'extrémité est une zone entre l'extrémité dudit matériau de tube (12) et un endroit écarté de 15 à 500 mm de cette extrémité, et le revêtement fondu avec le premier matériau d'alliage (15) est appliqué sur au moins un côté de cette zone d'extrémité,
la zone d'extrémité est une zone entre l'extrémité dudit matériau de plaque (13) et un endroit écarté de 15 à 500 mm de cette extrémité, et le revêtement fondu avec le premier matériau d'alliage est appliqué sur au moins un côté de cette zone d'extrémité,
la zone d'extrémité est une zone incluant les matériaux de plaque des deux côtés dudit panneau de foyer de chaudière, et le revêtement fondu avec le premier matériau d'alliage est enduit sur au moins un côté de cette zone d'extrémité, et
le revêtement fondu avec le second matériau d'alliage (16) est appliqué sur au moins un côté du matériau de base métallique sur la zone de non-extrémité autre que ladite zone d'extrémité.

8. Elément de chaudière revêtu d'alliage selon la revendication 5, dans lequel les revêtements avec les matériaux d'alliage sont appliqués sur un côté du matériau de base métallique en forme de panneau où les matériaux de plaque et les matériaux de tube sont unis de manière alternée de façon à ce que les matériaux de plaque (13) soient situés des deux côtés des matériaux de tube (12), où le terme « côté du matériau de base métallique en forme de panneau » signifie la partie du matériau de base métallique en forme de panneau, qui est destinée à être protégée.

9. Elément de chaudière revêtu d'alliage selon la revendication 8, dans lequel la zone d'extrémité est une zone entre l'extrémité dudit matériau de tube (12) et un endroit écarté de 15 à 500 mm de cette extrémité, et le revêtement fondu avec le premier matériau d'alliage (15) est appliqué sur un côté de cette zone d'extrémité,
la zone d'extrémité est une zone entre l'extrémité dudit matériau de plaque (13) et un endroit écarté de 15 à 500 mm de cette extrémité, et le revêtement fondu avec le premier matériau d'alliage est appliqué sur un côté de cette zone d'extrémité,
la zone d'extrémité est une zone incluant les matériaux de plaque des deux côtés dudit panneau de foyer de chaudière, et le revêtement fondu avec le premier matériau d'alliage est appliqué sur un côté de cette zone d'extrémité, et
le revêtement fondu avec le second matériau d'alliage (16) est appliqué sur un côté du matériau de base métallique sur la zone de non-extrémité autre que ladite zone d'extrémité.

10. Elément de chaudière revêtu d'alliage selon la revendication 1, dans lequel la proportion de B dans ledit premier matériau d'alliage ne vaut pas moins de 1,8 % en masse et pas plus de 2,4 % en masse, la proportion de Si dans ledit premier matériau d'alliage ne vaut pas moins de 3,6 % en masse et pas plus de 4,0 % en masse, et la proportion de C dans ledit premier matériau d'alliage ne vaut pas plus de 0,2 % en masse.

11. Elément de chaudière revêtu d'alliage selon la revendication 1, dans lequel la proportion de Cr dans ledit premier matériau d'alliage ne vaut pas moins de 14,5 % en masse et pas plus de 16,5 % en masse.
